# EUROPÄISCHE PATENTSCHRIFT

(11) **EP 3 816 588 B1**
(45) Veröffentlichungstag und Bekanntmachung des Hinweises auf die Patenterteilung: **09.11.2022**
(21) Anmeldenummer: 20197537.2
(22) Anmeldetag: 22.09.2020
(51) Int. Cl.: G01D 11/24, G01D 11/30, H01H 36/00

(54) **SENSORGEHÄUSE**
SENSOR HOUSING
LOGEMENT DE CAPTEUR

(30) Priorität: 28.10.2019 DE 202019004415 U
(43) Veröffentlichungstag der Anmeldung: 05.05.2021
(73) Patentinhaber: K.W.H. Ciclosport Vertriebs GmbH, 82166 Gräfelfing (DE)
(72) Erfinder: GOLLING, Guido, 82166 Gräfelfing (DE); HOCHSCHORNER, Andreas, 82166 Gräfelfing (DE)
(74) Vertreter: Wunderlich & Heim Patentanwälte Partnerschaftsgesellschaft mbB

(56) Entgegenhaltungen:
- FR-A1- 2 786 572
- JP-A- 2018 186 608
- US-A- 5 438 869
- US-A- 5 637 995
- US-A1- 2003 002 241

## Beschreibung

Die Erfindung betrifft eine Sensorvorrichtung mit einem becherartigen Sensorgehäuse und einem kabelgebundenen Sensor, wobei das becherartige Sensorgehäuse einen Einführbereich für den kabelgebundenen Sensor aufweist sowie einen Ausrichtbereich für den Sensor und einen Platzierungsbereich des Sensors nahe der Stirnseite des Sensorgehäuses.

Sensorvorrichtungen dieser Art werden vor allen Dingen bei Rädern oder Bikes eingesetzt, um zum Beispiel über magnetische Impulse die zurückgelegten Strecken, Geschwindigkeiten und weitere Parameter des Bikes zu erfassen.

Bei den bekannten Sensorvorrichtungen treten vor allen Dingen Probleme der präzisen Anordnung am Rahmen der Bikes aber auch Ungenauigkeiten in der Messerfassung auf, die auf den Sensor und sein Sensorgehäuse zurückgehen, da diese nicht genug robust für verschiedene Fahrzwecke ausgelegt sind.

Insbesondere kann sich eine Ungenauigkeit in den Messdaten dadurch ergeben, dass der eigentliche Sensor im Sensorgehäuse nicht zuverlässig sicher und präzis angeordnet ist, und durch einwirkende Stoßkräfte Lageveränderungen erfährt, welche letztlich zu Messungenauigkeiten führen.

Auch die Anordnung der Sensorvorrichtung selbst am Rahmen von Bikes sollte einfach und präzis erfolgen können.

In der US 2003/002241 A1 ist eine Sensorvorrichtung beschrieben, deren Sensorkomponenten auf einer Leiterplatte vorgesehen sind. Die Leiterplatte ist so innerhalb des Sensorgehäuses und des verwendeten Spritzgießmaterials angeordnet, dass die Leiterplatte sich bei Temperaturänderungen ausdehnen oder kontrahieren kann. Auch ein Vibrieren der Leiterplatte mit den Sensorkomponenten ist bei Stoßauswirkungen von außen möglich. Diese einwirkenden Faktoren können jedoch die gesamte Messgenauigkeit der Sensorvorrichtung stark beeinflussen.

Aus der US 5 438 869 A ist eine Sensorvorrichtung bekannt, bei der der kabelgebundene eigentliche Sensor frei in das Innere des Sensorgehäuses ragt und sich dadurch bei Krafteinwirkungen von außen auch Lageveränderungen ergeben können, was zu Veränderungen in der Kontakt- beziehungsweise Messgenauigkeit führen kann.

Die FR 2 786 572 A1 beschreibt eine andere Sensorvorrichtung zur Erfassung des Status in einer Kraftstoffzuführleitung. Der eigentliche Sensor, ein Reed-Schalter beziehungsweise Unterbrecher, wird hierbei in einem inneren Gehäuse in einen bogenartigen Klammerkontakt gesetzt, wobei dieser Klammerkontakt mit einer Kabelzuführung in Verbindung steht. Eine präzise Anordnung des Reed-Kontaktes innerhalb des Gehäuses vor dem Einbringen von Dichtmaterial zwischen Reed-Kontakt und Gehäuse ist in diesem Stand der Technik nicht angesprochen.

Die JP 2018 186608 A beschreibt eine Vorrichtung (Fig. 6) zur Anordnung eines quaderförmigen, länglichen Temperatursensors in einem Gehäuse zur Erfassung der Temperatur einer Bus-Schiene. Zur Einführung des quaderförmigen Temperatursensors sind zwar Führungsstege im Gehäuse vorgesehen und auch ein sich verjüngender Ausrichtbereich für den Temperatursensor. Zur besseren Übertragung der Wärme beziehungsweise der Temperatur der Bus-Schiene auf den Temperatursensor ist jedoch ein flächenmäßig sehr großer Kontakt in der Erstreckungslänge des Temperatursensors vorgesehen, wobei die Stirnseite des eigentlichen Temperatursensors als eigentliche Sensorkontaktfläche ungenutzt bleibt. Im Vergleich zu einer stirnseitigen Impulserfassung eines Sensors ist in der genannten Vorrichtung eine großflächige und sich über die Länge des Temperatursensors erstreckende Erfassung der Temperatur maßgeblich.

Unter Berücksichtigung dieser Nachteile besteht daher die Aufgabe, eine Sensorvorrichtung der gattungsgemäßen Art so auszulegen, dass auch bei von außen einwirkenden Kräften wie Erschütterungen oder Stoßkräften die Messgenauigkeit der Sensorvorrichtung erhalten bleibt.

Diese Aufgabe wir durch die Merkmale des kennzeichnenden Teils des Anspruchs 1 gelöst.

Ein wesentlicher Kerngedanke ist hierbei, den kabelgebundenen Sensor sehr genau in das Sensorgehäuse einführen und darin anordnen zu können, wobei die Anordnung des Sensors im Sensorgehäuse auch bei unterschiedlichsten Krafteinwirkungen erhalten bleibt. Hierdurch wird sichergestellt, dass auch die Messgenauigkeit der Sensorvorrichtung auch bei plötzlichen Krafteinwirkungen nicht beeinträchtigt wird.

Zur hohen Messgenauigkeit trägt einerseits die Auslegung bei, dass der Sensor beim Einführen in das becherartige Sensorgehäuse durch eine Querschnittsinnenkontur des Ausrichtbereiches geführt werden muss und der Sensor selbst eine entsprechende Querschnittskontur aufweist, die der Querschnittsinnenkontur des Ausrichtbereichs angepasst ist. Die entsprechende Ausrichtung des Sensors beim Einführen bis zum Platzierungsbereich nahe auf der Innenseite der Stirnseite des Sensorgehäuses und die Einbettung im ausgehärteten Material ergeben daher eine festliegende Position des Sensors im Sensorgehäuse.

Das Einführen des Sensors in das Sensorgehäuse erfolgt hierbei in ein im Inneren des Sensorgehäuses eingebrachtes aushärtbares Material, insbesondere einem fließfähigen Kunststoff oder Harz, wobei nach der Platzierung des Sensors im Bereich der Innenfläche der Stirnseite des Sensorgehäuses, das aushärtbare Material temperatur- oder strahlungsmäßig ausgehärtet wird.

Im Einführungsbereich des Sensorgehäuses werden über den Innenumfang des Sensorgehäuses verteilt, längliche Führungsstege vorgesehen, mittels der der Sensor axial und mittig in den Ausrichtbereich des Sensorgehäuses eingebracht werden kann, um dort aufgrund der angepassten Konturen seine für die hohe Messgenauigkeit erforderliche Ausrichtung in einer bestimmten Winkelanordnung, zu erreichen. Hierfür werden im Einführbereich im gleichen Winkelabstand zueinander vorgesehene vier Führungsstege vorgesehen.

Beim Einführen des mit einem Kabel verbundenen Sensors in den Innenbereich des Sensorgehäuses ist nach dem Einführbereich am Ausrichtbereich oder vor dem Ausrichtbereich ein verjüngender Querschnitt vorgesehen, so dass der Sensor noch einfacher und genauer in den Ausrichtbereich, der insbesondere einen Querschnitt in Form eines Ovals haben kann, eingeschoben werden kann.

Nach diesem Ausrichtungsvorgang wird der Sensor mit Kabel weiter durch das fließfähige, aushärtbare Material bis in seinen bestimmungsgemäßen Platzierungsbereich nahe der Innenseite der Stirnseite des Sensorgehäuses geführt.

Dieser Fertigungsvorgang erfolgt zweckmäßigerweise bei einer vertikalen Anordnung des becherartigen Sensorgehäuses mit nach oben zeigender Öffnung und unten im Bodenbereich geschlossener Stirnfläche.

Eine Verbesserung erreicht man bei der Sensorvorrichtung dadurch, dass am mit dem Sensor verbundenen Kabel eine Zugentlastung angeordnet wird. Dies kann in einfacher Weise durch die Anordnung eines O-Ringes auf dem Kabel erfolgen. Hierbei wird bevorzugt, dass die Öffnung des O-Ringes einen Presssitz am Kabelmantel erzeugt, um auf das Kabel von außen einwirkende Kräfte aufzunehmen und auf das gesamte Sensorgehäuse zu übertragen. Der O-Ring wird daher bevorzugt in einer Ringnut am Einführungsbereich des Sensorgehäuses fixiert. Zweckmäßigerweise erfolgt die Fixierung des O-Ringes nach dem Aushärten des im Inneren des Sensorgehäuses eingebrachten Materials.

Die Möglichkeit der Zugentlastung durch einen am Sensorgehäuse fixierten O-Ring hat auch den Vorteil, dass diese unterschiedliche Zugentlastung auch mit unterschiedlichen Öffnungen von O-Ringen realisierbar ist.

Der Abschluss mittels O-Ring deckt auch ästhetisch das eingefüllte und ausgehärtete Material ab.

Das Sensorgehäuse wird bevorzugt aus einem Kunststoff hergestellt. Insbesondere eignet sich hierfür der Kunststoff mit dem Markennamen "Lexan".

Als Sensor oder Sensorelement wird zweckmäßigerweise ein Reed-Kontakt eingesetzt, der durch den Einfluss magnetischer Felder geschlossen oder geöffnet werden kann. Im Hinblick auf eine gute Erfassbarkeit eines magnetischen Feldes, das in der Nähe der äußeren Stirnseite des becherartigen Sensorgehäuses auftritt, wird der Sensor sehr nahe am inneren Stirnbereich des Sensorgehäuses platziert.

Der luft- und blasenfrei in das Innere des Sensorgehäuses eingebrachte fließfähige Kunststoff oder Harz stellt daher nach Aushärtung des Materials die Beibehaltung einer genauen Anordnung des Sensors im Sensorgehäuse sicher.

Eine etwas geänderte Herstellungsweise kann auch berücksichtigen, dass der kabelgebundene Sensor in das becherartige Sensorgehäuse vor Einbringen des fließfähigen Materials eingebracht und platziert wird und erst nachfolgend das fließfähige Einbettungsmaterial in das Innere des becherartigen Sensorgehäuses eingebracht wird.

Die Erfindung wird nachfolgend anhand zweier schematischer Zeichnungen noch näher erläutert. Es zeigen:
- Fig. 1: einen Längsschnitt durch ein Sensorgehäuse, ohne Sensor und Kabel, aber mit endseitig vorgesehener Zugentlastung; und

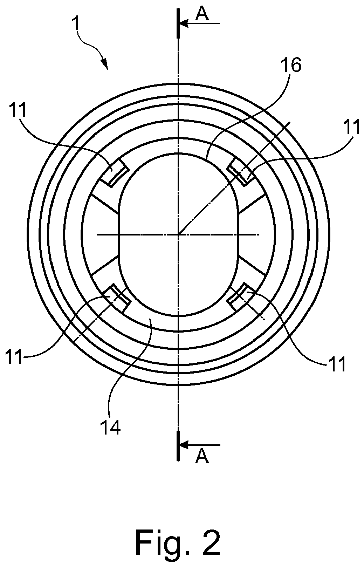

- Fig. 2: in etwas vergrößerter Form einen Vertikalschnitt durch ein Sensorgehäuse wie in Fig. 1 dargestellt ohne endseitige Zugentlastung in einer Ansicht von links; der schematische Schnitt nach Fig. 1 ist in Fig. 2 mit A-A markiert.

Die erfindungsgemäße Sensorvorrichtung ist nachfolgend anhand zweier schematischer Darstellungen der wesentlichen Baugruppe, nämlich eines Sensorgehäuse 1, ohne den eigentlichen Sensor beziehungsweise das Sensorelement und ohne einen entsprechenden Kabelanschluss, schematisch gezeigt und näher erläutert.

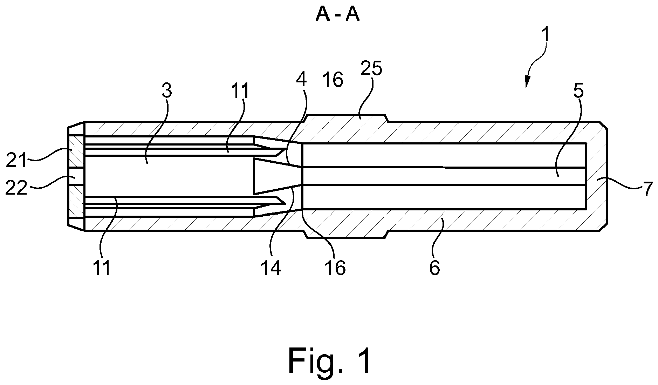

Der Längsschnitt nach Fig. 1 durch ein becherartiges Sensorgehäuse 1 zeigt den insbesondere einstückig aus einem Kunststoff, wie Lexan, hergestellten Becher des Sensorgehäuses 1. Der linke Endbereich des Sensorgehäuses 1 zeigt eine Öffnung, in die ein O-Ring 21 eingesetzt und fixiert ist.

Das Sensorgehäuse 1 ist rechts in Art eines Bechers an der Stirnseite 7 geschlossen.

Im Herstellvorgang der Sensorvorrichtung wird das Sensorgehäuse 1 üblicherweise mit seiner linksseitigen Öffnung nach oben in Vertikalstellung angeordnet.

Es wird dann ein aushärtbares, fließfähiges Material oder ein Harz in den Becher 6 des Sensorgehäuses 1 eingebracht. Nachfolgend wird der eigentliche Sensor mit angeschlossenem Kabel in die obere Öffnung des Bechers 6 eingesetzt und mittels der Führungsschienen 11 mittig vom Einführbereich 3 in den Ausrichtbereich 4 geführt beziehungsweise abgesenkt. Über den konischen Verjüngungsbereich 14 wird der Sensor mittels der Innenkontur, die als Oval 16 gestaltet ist, ausgerichtet.

Der Sensor beziehungsweise das Sensorelement hat im dargestellten Beispiel ebenfalls die Außenform des entsprechenden Ovals 16, so dass der Sensor passgenau durch das Oval 16 in den rechten beziehungsweise unteren Platzierungsbereich (5) geführt werden kann.

Nach Erreichen der Endstellung des Sensors im Bereich der Innenfläche der Stirnseite 7 wird nachfolgend der Aushärtvorgang des aushärtbaren Materials durchgeführt, wobei eine luft- und blasenfreie Einbettung und Fixierung des Sensors im Sensorgehäuse 1 realisierbar ist.

Der zur Zugentlastung des Sensors auf dem Kabel angebrachte O-Ring 21 kann nach dem Aushärten des fließfähigen Materials, gegebenenfalls auch vor dem Aushärten, in einer Ringnut an der Öffnungsseite des Einführungsbereichs 3 fixiert werden. Es wird damit auch gegenüber dem Einbettungs- und Vergussmaterial ein Abschluss geschaffen.

In dieser Auslegung stellt die Sensorvorrichtung einen sehr genau angeordneten Sensor dar, der auch durch einwirkende Stoßkräfte in seiner Lagepositionierung im Innern des Sensorgehäuses nicht beeinträchtigt wird und damit auch eine hohe Messgenauigkeit sicherstellt.

Zur genauen Positionierung des Sensorgehäuses 1 an dem Rahmen eines Bikes kann auch eine Ringwulst 25 im mittleren Bereich des Sensorgehäuses 1 dienen, wobei einseitig oder beidseitig von der Ringwulst 25 Klemmhalter die weitere Befestigung am Rahmen eines Bikes durchführen.

## Patentansprüche

1. Sensorvorrichtung mit einem becherartigen Sensorgehäuse (1) und einem kabelgebundenen Sensor,
wobei das becherartige Sensorgehäuse (1) einen Einführbereich (3) für den kabelgebundenen Sensor aufweist,
einen Ausrichtbereich (4) für den Sensor, der eine Querschnittsinnenkontur (16) aufweist, die der Querschnittskontur des Sensors angepasst ist,
einen Platzierungsbereich (5) des Sensors nahe der Stirnseite (7) des Sensorgehäuses (1),
und wobei im Sensorgehäuse (1) ein aushärtbares Material vorgesehen ist, und der Sensor im Sensorgehäuse (1) in seinem Platzierungsbereich (5) in das aushärtbare Material eingebracht ist,
**dadurch gekennzeichnet,**
a) **dass** vor oder am Ausrichtbereich (4) des Sensors ein sich verjüngender Querschnitt (14) zur Führung des Sensors in den Platzierungsbereich (5) vorgesehen ist,
b) **dass** der Ausrichtbereich (4) einen Querschnitt in Form eines Ovals (16) hat,
c) **dass** im Einführbereich (3) vier Führungsstege (11) für den Sensor, mit gleichem Winkelabstand zueinander, vorgesehen sind,
d) **dass** das aushärtbare Material mit eingebettetem Sensor ausgehärtet ist.

2. Sensorvorrichtung nach Anspruch 1,
**dadurch gekennzeichnet,**
**dass** am Einführbereich (3) des Sensorgehäuses (1) eine Zugentlastung für Kabel und Sensor, insbesondere als O-Ring (21), mit kabelangepasster Öffnung (22), vorgesehen ist.

3. Sensorvorrichtung nach einem der Ansprüche 1 bis 2, **dadurch gekennzeichnet,**
**dass** das aushärtbare Material ein fließfähiger Kunststoff oder ein Harz ist.

4. Sensorvorrichtung nach einem der Ansprüche 1 bis 3, **dadurch gekennzeichnet,**
**dass** das Sensorgehäuse (1) aus einem Kunststoff, insbesondere Lexan, hergestellt ist.

5. Sensorvorrichtung nach einem der Ansprüche 1 bis 4, **dadurch gekennzeichnet,**
**dass** das becherartige Sensorgehäuse (1) einen stirnseitigen (7) Abschluss aufweist, in dessen Nahbereich die Erfassungszone des Sensors, der insbesondere als Reed-Kontakt ausgebildet ist, vorgesehen ist.

## Claims

1. Sensor device with a beaker-like sensor housing (1) and a wired sensor,
wherein the beaker-like sensor housing (1) has an introduction region (3) for the wired sensor,
an orientation region (4) for the sensor which has an internal cross-sectional contour (16) which is adapted to the cross-sectional contour of the sensor,
a placement region (5) of the sensor close to the end face of the sensor housing (1),
and wherein in the sensor housing (1) is provided a curable material, and the sensor in the sensor housing (1) is inserted into the curable material into its placement region (5),
**characterised in that**
a) a tapering cross-section (14) for guiding the sensor into the placement region (5) is provided in front of or at the orientation region (4) of the sensor,
b) the orientation region (4) has a cross-section in the form of an oval (16).
c) four guide bars (11) for the sensor at the same angular distance from each other, are provided in the introduction region (3),
d) the curable material is cured with the sensor embedded.

2. Sensor device according to Claim 1,
**characterised in that**
a strain relief means for the cable and sensor, in particular formed as an O-ring (21), with a cable-adapted opening (22), is provided on the introduction region (3) of the sensor housing (1).

3. Sensor device according to one of Claims 1 to 2,
**characterised in that**
the curable material is a free-flowing plastics material or a resin.

4. Sensor device according to one of Claims 1 to 3,
**characterised in that**
the sensor housing (1) is produced from a plastics material, in particular Lexan.

5. Sensor device according to one of Claims 1 to 4,
**characterised in that**
the beaker-like sensor housing (1) has an end-face closure (7), in the vicinity of which the detection zone of the sensor, which is formed in particular as a Reed contact, is provided.

## Revendications

1. Dispositif de capteur avec un logement de capteur en forme de gobelet (1) et un capteur relié par câble,
dans lequel le logement de capteur en forme de gobelet (1) présente une zone d'insertion (3) pour le capteur relié par câble,
une zone d'alignement (4) pour le capteur, laquelle présente un contour intérieur transversal (16) qui est adapté au contour transversal du capteur, et
une zone de positionnement (5) du capteur à proximité de la face frontale (7) du logement de capteur (1)
et dans lequel un matériau durcissable est prévu dans le logement de capteur (1) et le capteur est inséré dans le logement de capteur (1), dans sa zone de positionnement (5), dans le matériau durcissable,
**caractérisé**
a) **en ce que** devant ou au niveau de la zone d'alignement (4) du capteur est prévue une section se rétrécissant (14) pour guider le capteur dans la zone de positionnement (5),
b) que la zone d'alignement (4) a une section en forme d'ovale (16),
c) que dans la zone d'insertion (3) sont prévues quatre barrettes de guidage (11) pour le capteur, avec le même écart angulaire entre elles, et
d) que le matériau durcissable est durci avec le capteur intégré.

2. Dispositif de capteur selon la revendication 1,
**caractérisé**
**en ce qu'**au niveau de la zone d'insertion (3) du logement de capteur (1) est prévu un dispositif de soulagement de traction pour le câble et le capteur, en particulier sous la forme d'une bague torique (21) avec une ouverture adaptée au câble (22).

3. Dispositif de capteur selon une des revendications 1 à 2,
**caractérisé**
**en ce que** le matériau durcissable est une matière plastique fluide ou une résine.

4. Dispositif de capteur selon une des revendications 1 à 3,
**caractérisé**
**en ce que** le logement de capteur (1) est fabriqué en matière plastique, en particulier en Lexan.

5. Dispositif de capteur selon une des revendications 1 à 4,
**caractérisé**
**en ce que** le logement de boîtier en forme de gobelet (1) présente une obturation frontale (7) à proximité de laquelle est prévue la zone de détection du capteur qui est configurée en particulier sous la forme d'un contact Reed.
